# EUROPÄISCHE PATENTANMELDUNG

(11) **EP 4 385 318 A1**
(43) Veröffentlichungstag der Anmeldung: **19.06.2024**
(21) Anmeldenummer: 23216876.5
(22) Anmeldetag: 14.12.2023
(51) Int. Cl.: A01G 9/02, A01G 27/00, B65D 88/12

(54) **BEGRÜNUNGSCONTAINER**

(30) Priorität: 14.12.2022 DE 102022133355
(71) Anmelder: Simon, Thomas, 77749 Hohberg (DE)
(72) Erfinder: Simon, Thomas, 77749 Hohberg (DE)
(74) Vertreter: Mertzlufft-Paufler, Cornelius

(57) **Zusammenfassung**

Die Erfindung schlägt einen Begrünungscontainer (1) mit einem metallischen Traggestell (2) vor. Das Traggestell (2) weist eine Halterung (3) zum Abladen des Begrünungscontainers (1) von einem Nutzfahrzeug (22) auf, wobei das Traggestell (2) ein Modul (7) trägt, welches einen Begrünungsbehälter (4) umfasst, und wobei der Begrünungsbehälter (4) in fluidischer Verbindung (20) mit einem von dem Traggestell (2) getragenen Wassertank (5) steht

## Beschreibung

Die Erfindung betrifft einen Begrünungscontainer.

Siedlungen, insbesondere Städte, haben im Zuge der Globalisierung und der drastischen Klimaveränderung mit Wärmeinseln, Smog und Starkregen zu kämpfen.

Ferner sind aufgrund infrastrukturell bedingter Baumaßnahmen wenig bis keine Grünflächen in Siedlungen vorhanden. Mit der voranschreitenden Urbanisierung treten somit Grünflächen immer weiter zurück, was in verschiedenen Regionen zum Teil verheerende Auswirkungen auf die Biodiversität zur Folge hat. Auch Gesundheitsprobleme in der Bevölkerung stehen im Zusammenhang mit der immer geringer werdenden Anzahl an Grünflächen.

In der heutigen Städteplanung ist ein Kernziel, Städte klimaneutral auszubauen. Dabei sollen insbesondere Begrünungen angelegt werden, um insbesondere die Biodiversität zu erhöhen und Städte und darin befindliche Wärmeinseln abzukühlen. Problematisch hierbei ist allerdings, dass vorhandene Infrastrukturen, wie beispielsweise Häuser, Straßen und Kanalisationen, das Anlegen von Begrünungen erschweren, räumlich limitieren bzw. gänzlich verhindern. So ist es insbesondere problematisch, verholzte Pflanzen wie Bäume in eine vorgegebene Infrastruktur zu integrieren. Dies hängt unter anderem daran, dass Bäume durch ihr Wurzelgeflecht schädigend für Kanalisationen und/oder unterirdische Leitungen sind.

Ebenfalls ist ein Transport von verholzten Pflanzen besonders problematisch, wenn diese relativ groß sind. Es ist technisch schwierig insbesondere Bäume (mitsamt Wurzelgeflecht und Nährboden) zu transportieren. Dies liegt bei großen Individuen insbesondere an deren Gewicht und Größe.

Begrünungen mit Bäumen sind ferner problematisch, da sie sehr teuer sind und somit ein ökonomisches Problem darstellen. Ebenfalls können Bäume, welche bereits mehrere Jahre an einem Ort stehen, nicht mehr verpflanzt werden, sodass Begrünungen mit Bäumen sehr unflexibel sind. Hierdurch scheitern geplante Baumbepflanzungen bereits an politischen Entscheidungsträgern.

Aufgrund der soeben geschilderten technischen Probleme in der Städteplanung, ist es Aufgabe der Erfindung die Begrünung von Städten zu vereinfachen. Insbesondere soll die Begrünung mit Bäumen verbessert werden.

Zur Lösung der genannten Aufgabe sind erfindungsgemäß die Merkmale des Anspruchs 1 vorgesehen. Insbesondere wird somit zur Lösung der genannten Aufgabe bei einem Begrünungscontainer erfindungsgemäß vorgeschlagen, dass der Begrünungscontainer ein metallisches Traggestell aufweist, dass das Traggestell eine Halterung zum Abladen des Begrünungscontainers von einem Nutzfahrzeug aufweist, wobei das Traggestell ein Modul trägt, welches einen Begrünungsbehälter umfasst, und wobei der Begrünungsbehälter in fluidischer Verbindung mit einem von dem Traggestell getragenen Wassertank steht. Mit Tragen ist gemeint, dass das Traggestell eine Gewichtskraft aufnimmt. Der Begrünungscontainer ist durch seine Halterung, welche für eine form- und/oder kraftschlüssige Verbindung mit einer Halterung eines Nutzfahrzeugs ausgebildet ist, transportierbar. Vorteilhaft ist die Transportierbarkeit des Begrünungscontainers, wenn der Begrünungsbehälter mit einer Begrünung, beispielsweise einem Baum, bepflanzt ist. Somit kann eine Begrünung von einem Ort zu einem anderen Ort transportiert werden, insbesondere nachdem die Begrünung zunächst in dem Begrünungscontainer gezielt angepflanzt und gewachsen ist.

Die Halterung des Begrünungscontainers ist stabil und robust ausgebildet und kann insbesondere große Druck- und/oder Zugkräfte aufnehmen, was insbesondere beim Transport von massereicher Begrünung, beispielsweise einem Baum, und/oder dem gefüllten Wassertank des Begrünungscontainers vorteilhaft das Transportgut absichert.

So kann die Halterung des Begrünungscontainers beispielsweise aus Metall und/oder einem anderen robusten und stabilen Material gefertigt sein.

Die Halterung des Begrünungscontainers ermöglicht das Abladen des Begrünungscontainers von dem Nutzfahrzeug insbesondere dann, wenn die form- und/oder kraftschlüssige Verbindung mit der Halterung des Nutzfahrzeuges hergestellt ist. Auch bei dem Abladevorgang ist die robuste und stabile Ausbildung der Halterung des Begrünungscontainers, aber auch des metallischen Traggestells, vorteilhaft.

Das Traggestell ist so ausgebildet, dass es wenigstens den Begrünungsbehälter und den Wassertank tragen, insbesondere aufnehmen kann. Hierdurch kann insbesondere ein rutsch- und fallsicherer Transport ermöglicht werden.

Der Begrünungsbehälter ist bevorzugt aus einem steifen Metall ausgebildet, kann aber aus einem metallischen Netz und/oder Gitter gefertigt sein. In beiden Fällen kann eine Kunststoff-Verkleidung, beispielsweise eine GFK-Verkleidung, vorgesehen sein, wodurch der Begrünungsbehälter langlebiger und/oder dicht ausgebildet sein kann. Sowohl die Materialwahl des Begrünungsbehälters als auch dessen Verkleidung sind nicht auf die Verwendung von Metall limitiert.

Der Begrünungsbehälter hat bevorzugt eine seitliche Wandung, sodass ein seitlicher aus dem Begrünungsbehälter wachsender Bewuchs verhindert wird.

Der Begrünungsbehälter ist bevorzugt seitlich, insbesondere dichtend, geschlossen. Dies schließt nicht aus, dass seitlich eine Aussparung für die fluidische Verbindung vorhanden sein kann.

Der Begrünungsbehälter ist bevorzugt ein Topf, insbesondere wobei eine Grundfläche des Topfes rechteckig ist.

Eine seitliche Umgrenzung des Begründungsbehälters ist bevorzugt durch für Flüssigkeit und/oder Feststoffe dichtend ausgebildet. Hierbei kann die seitliche Umgrenzung eine Aussparung für die fluidische Verbindung aufweisen, insbesondere wobei auch diese mit installierter Verbindung abdichtet.

Das Metall des Begrünungscontainers ist vorzugsweise rostfrei, sodass der Begrünungscontainer besonders langlebig sein kann. Beispielsweise kann es bei dem Metall um Stahl, insbesondere rostfreien Stahl, handeln.

Der Begrünungsbehälter ist vorzugsweise austauschbar an dem Begrünungscontainer ausgebildet. Somit kann der Begrünungsbehälter mitsamt darin befindlicher Begrünung und/oder Nährboden ausgetauscht werden. Der Begrünungsbehälter kann aber auch fest, vorzugsweise einstückig mit dem Begrünungscontainer verbunden sein, sodass der Begrünungsbehälter besonders stabil und sicher transportiert werden kann. Durch die Austauschbarkeit des Begrünungsbehälter mitsamt Begrünung kann ein Nutzer beispielsweise eine auf eine Jahreszeit angepasste Begrünung für den Begrünungscontainer wählen.

Der Wassertank fungiert als Wasserspeichermodul, wodurch die Begrünung, welche sich in dem Begrünungsbehälter befindet, vorteilhaft mit Wasser versorgt werden kann. Dabei erfolgt die Versorgung der Begrünung über die fluidische Verbindung, welche den Begrünungsbehälter mit dem Wassertank verbindet. Der Wassertank kann ein separates Modul sein, aber auch in dem den Begrünungsbehälter umfassenden Modul eingefasst sein.

Die fluidische Verbindung kann beispielsweise über Leitungen und/oder über netzartige Strukturen, welche den Begrünungsbehälter und den Wassertank separieren, erfolgen.

Der Wassertank kann vorzugsweise austauschbar ausgebildet sein, sodass der Wassertank als Regenauffangbasis an öffentlichen Gebäuden verwendet werden kann.

Der Wassertank ist bevorzugt frei beweglich über dem Traggestell angeordnet oder lösbar am Traggestell befestigt. Der Wassertank kann so beispielsweise auch außerhalb des Begrünungscontainers befüllt werden. Der Wassertank kann hierzu beispielsweise an einem Regenablauf eines Gebäudes wie etwa eines Schulgebäudes aufgestellt werden auf dem Traggestellt angeordnet werden, wenn der Wassertank mit ausreichend Regenwasser befüllt ist. Die Begrünungscontainer können so auch dazu beitragen, dass bei starken Regenfällen die Gefahr einer Überlastung der Wasserabläufe reduziert wird.

Der Begrünungscontainer, insbesondere der Begrünungsbehälter und/oder der Wassertank, sind so ausgebildet, dass ein Wasserstau, welcher einen negativen Einfluss durch Überwässerung auf die Begrünung haben kann, vermieden wird. Dabei können Begrünungscontainer, insbesondere Begrünungsbehälter und/oder Wassertank, so ausgebildet sein, dass Wasser passiv oder aktiv abfließen kann, wenn eine bestimmtes Wasservolumen erreicht ist.

Der erfindungsgemäße Begrünungscontainer vereinfacht die Begrünung von Städten, da der transportierbare und vorzugsweise modulare Begrünungscontainer Pflanzen, insbesondere Bäume, transportieren kann. Außerdem kann der Begrünungscontainer an einen Ort abgestellt werden, sodass dieser Ort begrünt ist, ohne dass eine vorhandene, insbesondere unterirdische, Infrastruktur beeinträchtigt würde. So kann insbesondere durch den Wassertank darauf verzichtet werden, den Begrünungscontainer in eine Grube zu platzieren. Somit können insbesondere Bäume nach Jahren an einem Ort wieder versetzt werden.

Bei einer vorteilhaften Ausführungsform kann vorgesehen sein, dass das Traggestell eine vertikal aufragende metallische Seitenwand umfasst, wobei die Halterung an der Seitenwand ausgebildet ist. Durch die vertikale Ausrichtung der metallischen Seitenwand kann die daran ausgebildete Halterung so positioniert sein, um mit gängigen Verbindungsteilen von Nutzfahrzeugen eine transportsichere Verbindung einzugehen.

Insbesondere ist die Seitenwand an einer Kurzseite des Traggestells ausgebildet. Durch die an der Kurzseite ausgebildete Seitenwand kann die Halterung optimal positioniert werden, um ein Abrollen des Begrünungscontainers an beispielsweise einem Abrollkipper zu ermöglichen. Somit kann der Begrünungscontainer an einem Bestimmungsort abgeladen werden.

Das Traggestell kann alternativ oder zusätzlich aufragende Seitenwände an den Längsseiten des Traggestells aufweisen, wobei die Halterung an einer der Seitenwände ausgebildet ist. An der anderen Seitenwand kann eine weitere Halterung ausgebildet sein. Das Traggestell kann in diesem Fall insbesondere zum Absetzen von einem Absetzkipper ausgebildet sein.

Vorzugsweise ragt die Seitenwand über den Begrünungsbehälter hinaus. Demnach ist eine vertikale Längsausdehnung der Seitenwand größer als bei dem Begrünungsbehälter, wodurch an der Seitenwand beaufschlagte Kräfte, insbesondere beim Abrollen des Begrünungscontainers besser verteilt werden können.

Bei einer vorteilhaften Ausführungsform kann vorgesehen sein, dass das Traggestell und die Halterung einstückig ausgebildet sind. Hierdurch kann eine Verbindung mit dem Nutzfahrzeug und somit der Transport des Begrünungscontainers besonders stabil ausgebildet sein. Durch die einstückige Verbindung des Traggestells mit der Halterung kann der Begrünungscontainer auch langlebiger ausgebildet sein.

Bei einer vorteilhaften Ausführungsform kann vorgesehen sein, dass der Begrünungscontainer eine Kippvorrichtung umfasst, die dazu eingerichtet ist, den Begrünungsbehälter zwischen einer Transportstellung und einer Gebrauchsstellung zu bewegen. Hierdurch kann beispielsweise erreichbar sein, dass der Begrünungsbehälter in einer Transportstellung gekippt ist und in einer Gebrauchsstellung aufgestellt werden kann. Dies ist für den Transport von hohen Bäumen relevant.

Vorzugsweise ist der Begrünungsbehälter kippbar und kann somit während des Transports in gekippter Transportposition verharren. Hierzu weist der Begrünungscontainer, insbesondere das Traggestell, bevorzugt eine Kippvorrichtung auf, welche mit dem Begrünungsbehälter bewegungsverbunden ist. Mittels der Kippvorrichtung kann der Begrünungsbehälter daher von einer Ausgangsstellung in eine Kippstellung bewegt werden. Die Kippvorrichtung weist bevorzugt mindestens ein bewegliches Teil auf. Das bewegliche Teil ist vorzugsweise an dem Traggestell beweglich, insbesondere drehbar, gelagert. Mit Kippen ist gemeint, dass der Begrünungsbehälter aus seiner Ausgangsstellung in eine Kippstellung, in der der Begrünungsbehälter gegenüber der Ausgangsstellung verkippt ist, überführt ist. Bevorzugt liegt der Begrünungsbehälter in der Ausgangsstellung mit seiner Bodenfläche und/oder in der Kippstellung mit einer seiner Seitenwände auf. Die genaue Bewegung, die der Begrünungsbehälter vollführt, um von der Ausgangsstellung in die Kippstellung zu gelangen, hängt von der konkreten Ausgestaltung der Kippvorrichtung ab und kann insbesondere translatorische und/oder eine rotatorische Bewegungen, insbesondere eine Kombination derartiger Bewegungen umfassen. Bevorzugt ist der Begrünungsbehälter um 90° kippbar.

Somit kann ein in den Begrünungsbehälter eingepflanzter Baum in den Begrünungscontainer liegend und/oder so positioniert sein, dass eingeschränkte Durchfahrtshöhen, beispielsweise in Tunneln, passiert werden können.

Durch die Kippbarkeit des Begrünungsbehälters kann ein Transport des Begrünungsbehälters verbessert sein, insbesondere wenn der Begrünungsbehälter mit einem Baum bepflanzt ist.

Bei einer vorteilhaften Ausführungsform kann vorgesehen sein, dass der Begrünungscontainer wenigstens ein weiteres Modul aufweist. Es können somit ein oder mehrere weitere Module in dem Begrünungscontainer ausgebildet sein.

Ein oder mehrere Module können beispielsweise dazu eingerichtet sein können, Wachstumsparameter der im Begrünungsbehälter bepflanzten Begrünung zu überwachen und zu steuern.

Die Module können insbesondere eigenständige Baueinheiten des Begrünungscontainers sein.

Insbesondere können die Module austauschbar an dem oder in dem Begrünungscontainer sein. Somit können die Module für eine Wartung und/oder Reparatur ausgetauscht werden. Ebenso können die Module aus dem Begrünungscontainer entnommen werden, wenn dieser mitsamt bepflanzter Begrünung transportiert wird. Denn durch einen freien Raum innerhalb des Begrünungscontainers kann beispielsweise ein Baum nach einer wie hierin beschriebenen Verkippung dem Begrünungscontainer liegend transportiert werden.

Bei einer vorteilhaften Ausführungsform kann vorgesehen sein, dass das Modul ein Steuermodul ist. Hierdurch können im Begrünungscontainer ablaufende Prozesse überwacht und gesteuert werden.

Das Modul kann ein weiterer Wassertank sein. Es kann also mehrere Wassertanks im Begrünungscontainer geben, sodass ein Gesamt-Wasservolumen besonders groß sein kann, wodurch mehr Wasser gespeichert sein kann. Durch eine Mehrzahl an Wassertank-Modulen kann das Wasser auch besser im Begrünungscontainer verteilt sein, sodass eine lokale Überfeuchtung der Begrünung verhindert werden kann.

Das Modul kann auch ein Zerstäuber sein. Unter einem Zerstäuber ist hier ein Gerät gemeint, welches eine Flüssigkeit in feine Tröpfchen zerteilt und diese dann durch beispielsweise Sprühen abgibt. Somit kann insbesondere lokal im Bereich der Begrünung die Luftfeuchtigkeit verändert werden, um die Wachstumsbedingungen der Pflanzen der Begrünung zu verbessern. Bei dieser besonders bevorzugten Ausführung wurde erkannt, dass durch das vom Zerstäuber abgegebene Wasser nicht nur die hierin beschrieben Begrünung mit Wasser versorgen kann, sondern auch in einem großflächigem Umkreis von bis zu 120 m² die Umgebungstemperatur um 3-4°C herabsenken kann. Somit kann ein Abkühlung von Wärmeinseln einer Siedlung um bis zu 3-4°C ermöglicht werden.

Vorzugsweise ist der Zerstäuber in fluidischer Verbindung mit einem hierin beschriebenen Wassertank, um Wasser zu beziehen.

Module können aber auch ein Mini-Spielbereich oder eine Klappsitzbank sein, wodurch der an einem Siedlungsort aufgestellte Begrünungscontainer besonders attraktiv für Bewohner sein kann. Dabei können derartige Module mit dem hierin beschriebenen Traggestell und/oder der hierin beschriebenen Verkleidung haltend verbunden sein.

Ein Modul kann auch ein weiteres Begrünungsmodul sein, welche die Begrünung des Begrünungscontainers erweitern. Somit kann die Oberseite des Begrünungscontainers durch eines oder mehrere Begrünungsbehälter bedeckt sein.

Alternativ oder zusätzlich kann das Modul autark mit Energie versorgt werden. Dies ist insbesondere dann von Vorteil, wenn das Modul elektrische Energie zum Funktionieren benötigt, wie beispielsweise das Steuermodul und der Zerstäuber.

Insbesondere kann das Modul durch Solarenergie autark mit Energie versorgt werden. Diese Versorgung ist besonders umweltfreundlich.

Bei einer vorteilhaften Ausführungsform kann vorgesehen sein, dass das Steuermodul zur Überwachung und/oder Steuerung wenigstens eines biotischen und/oder abiotischen Wachstumsfaktors einer Begrünung des Begrünungsbehälters, ausgebildet ist. Somit kann das Wachstum von Pflanzen der Begrünung überwacht und gesteuert werden und an Umgebungsbedingungen angepasst werden.

Beispielsweise kann die Bewässerung, insbesondere eine Wasserstandsmeldung des oder der Wassertanks und/oder eine relative Luftfeuchtigkeit, gemessen und gesteuert werden.

Bei einer vorteilhaften Ausführungsform kann vorgesehen sein, dass das Traggestell unterseitig lineare Führungselemente aufweist. Die Führungselemente können vorteilhaft dazu dienen, den Begrünungscontainer auf und/oder von einem hierin beschriebenen Nutzfahrzeug zu laden.

Vorzugsweise verlaufen die Führungselemente entlang der Längsausdehnung des Traggestells. Somit kann der Begrünungscontainer entlang seiner Längsausdehnung auf dem Nutzfahrzeug geführt werden.

Insbesondere Schienen können als Führungselemente ausgebildet sein. Schienen können kostengünstig an dem Begrünungscontainer ausgebildet werden und vorteilhaft an dessen Längsausdehnung angebracht werden.

Bei einer vorteilhaften Ausführungsform kann vorgesehen sein, dass der Begrünungscontainer eine außenseitige Verkleidung aufweist. Somit kann der Begrünungscontainer bzw. dessen Bestandteile wie etwa das Traggestell oder der Begrünungsbehälter von äußeren Einflüssen geschützt werden. Ebenso kann die Verkleidung optisch ansprechend ausgebildet sein, was besonders vorteilhaft bei der Platzierung des Begrünungscontainers in einem Siedlungsgebiet sein kann.

Die Verkleidung kann umlaufend um den Begrünungscontainer ausgebildet sein. Alternativ kann die Verkleidung auch an nur einer Seite des Begrünungscontainers ausgebildet sein. Insgesamt kann gesagt werden, dass die Verkleidung an so vielen Seiten des Begrünungscontainers ausgebildet sein kann, wie freistehend sind. Freistehend kann bedeuten, dass die jeweilige Seite keine flächige Kontaktierung zu einem benachbarten Objekt hat.

Vorzugsweise ist die Verkleidung aus horizontalen Verkleidungselementen ausgebildet. Dies können beispielsweise Holzplanken sein oder Cortenstahl, welcher besonders wetterbeständig ist. Die Verkleidung kann aber auch aus Platten bestehen, die vertikal und/oder diagonal angeordnet sind. Die Verkleidung kann den Kundenwünschen somit angepasst sein.

Vorteilhaft an der Verkleidung ist ferner die Möglichkeit, daran Werbeflächen zu versehen.

Ferner können mit der Verkleidung Rank- und/oder Verschattungsgitter ausgebildet sein.

Ebenso kann die Verkleidung dazu dienen, Photovoltaikanlagen daran anzubringen, wodurch eine autarke Energieversorgung des hierin beschriebenen Moduls mit Solarenergie ermöglicht und/oder verbessert sein kann.

Bei einer vorteilhaften Ausführungsform kann vorgesehen sein, dass in dem Begrünungsbehälter wenigstens eine verholzte Pflanze als Begrünung verpflanzt ist. Somit kann eine Siedlung mit verholzten Pflanzen bereichert werden. Dies ist insbesondere von Vorteil, da die verholzte Pflanze aufgrund ihres Wachstums in dem Begrünungscontainer, nicht in eine vorhandene, vorzugsweise unterirdische, Infrastruktur eingebracht werden muss. Insbesondere von Vorteil ist dies, wenn die verholzte Pflanze, wie in bevorzugter Ausführung vorgesehen, ein Baum ist.

Bei einer weiteren vorteilhaften Ausführungsform kann vorgesehen sein, dass in dem Begrünungsbehälter ein weiterer Begrünungsbehälter herausnehmbar angeordnet ist. In diesem kann sodann bevorzugt eine verholzte Pflanze als Begrünung verpflanzt werden. Dies kann beispielsweise von Vorteil sein, wenn keine ganzjährige gleichbleibende Begrünung gewünscht ist, sondern wenn ein Begrünungswechsel erfolgen soll.

Ferner kann der Begrünungscontainer genutzt werden, die verholzte Pflanze oder Pflanzen so lange darin wachsen zulassen, bis sie eine bestimmte Größe und/oder Vegetationsphase erreicht hat/haben, bis man diese in einer Siedlung aufstellen möchte. Insbesondere Bäume können eine lange Wachstumsphase haben. Sozusagen kann eine "Neubepflanzung" vor Ort (also beispielsweise in einer Siedlung) vermieden werden und anstatt dessen die bereits gewachsene Pflanze vor Ort aufgestellt werden.

Alternativ oder zusätzlich kann der Begrünungscontainer Nährboden für die Begrünung beinhalten. Somit kann die Begrünung bereits im Begrünungscontainer wachsen oder eingepflanzt werden.

Bei einer vorteilhaften Ausführungsform kann vorgesehen sein, dass der Begrünungsbehälter und/oder das wenigstens eine weitere Modul abdeckbar ist/sind. Eine Abdeckung kann verhindern, dass Nährboden oder Begrünung aus dem Begrünungsbehälter austreten, wenn dieser, wie zuvor beschrieben, gekippt wird.

Eine Abdeckung kann den Begrünungsbehälter und/oder das hierin beschriebene Modul vor äußeren Einflüssen, wie Niederschlägen oder Sonnenstrahlen, schützen.

Bei einer vorteilhaften Ausführungsform kann vorgesehen sein, dass der Begrünungsbehälter zumindest teilweise oberhalb des Wassertanks angeordnet ist. Somit kann der Wassertank zumindest teilweise zwischen einer Tragfläche des Traggestells und dem Begrünungscontainer angeordnet sein. Somit kann vorteilhaft eine Verdunstung/Kondensierung des im Wassertank befindlichen Wassers verhindert werden. Ferner von Vorteil kann sein, insbesondere wenn der oder mehrere Begrünungsbehälter oberhalb des Wassertanks angeordnet sind, dass die Begrünung großflächiger ausfallen kann, als wenn Wassertank und Begrünungsbehälter beispielsweise nebeneinander angeordnet wären.

Die vorgenannten Vorteile sind auch dann einschlägig, wenn, wie vorgesehen sein kann, das Modul zumindest teilweise unterhalb des Begrünungsbehälters angeordnet ist.

Bei einer vorteilhaften Ausführungsform kann vorgesehen sein, dass der Begrünungscontainer wenigstens eine elektrische Verteilerstation aufweist. Diese ist vorzugsweise nach außen ausgebildet und beispielsweise in der hierin beschriebenen Verkleidung eingefasst. Die Verteilerstation kann vorteilhaft als Ladestation, zum Beispiel für E-Scooter und dergleichen, dienen. Die Verteilerstation kann beispielsweise mit Solarenergie, insbesondere die hierin beschriebene, gespeist werden.

Bei einer vorteilhaften Ausführungsform kann vorgesehen sein, dass der Begrünungscontainer eine mittlere Höhe von einem Meter, insbesondere 90 Zentimeter, nicht überschreitet. Hierbei ist vor allem die Höhe einer Umrandung, welche den Begrünungscontainer einfasst, gemeint. Insbesondere sind hier nicht die Höhe der Halterung und einer gewachsenen Pflanze gemeint. Hier ist insbesondere vorgesehen, dass die mittlere Höhe der umlaufen Verkleidung die vorgenannten Werte nicht überschreitet . Eine derartige Höhe ist insofern sicher, als dass ein Mensch, welcher den Begrünungscontainer betreten und davon hinunterfallen sollte, sich bei dieser Fallhöhe geringere oder gar keine Verletzungen als von einer höheren Fallhöhe zuziehen sollte.

Bei einer vorteilhaften Ausführungsform kann vorgesehen sein, dass ein Volumen des Begrünungsbehälters mindestens zwei Kubikmeter beträgt. Somit kann eine großflächige Begrünung transportiert und aufgestellt werden, insbesondere, wenn die zuvor beschrieben mittlere Höhe des Begrünungscontainers einem Meter nicht überschreitet.

Eine Begrünung kann noch großflächiger sein, wenn, wie vorgesehen sein kann, das Volumen des Begrünungsbehälters mindestens fünf Kubikmeter beträgt.

Bei einer vorteilhaften Ausführungsform kann vorgesehen sein, dass der Begrünungscontainer wenigstens eine Öffnung nach außen hin aufweist, welche mit dem und/oder einem Wassertank in fluidischer Verbindung steht. Somit kann der hierin beschriebene und/oder ein weiterer Wassertank mit Regenwasser gespeist werden, sodass auf ein aktives Befüllen des oder der Wassertanks verzichtet werden kann. Somit kann kostbares Trinkwasser gespart werden.

Die Öffnungen können in dem Traggestell und/oder der Verkleidung eingefasst sein. Vorzugsweise können die Öffnungen verschließbar sein und/oder koppelbar zur Kopplung an Ablaufrohre von an Gebäuden befestigten Dachrinnensystemen. Somit kann/können der Wassertank/die Wassertanks durch Dachflächen von Gebäuden mit Regenwasser befüllt werden.

Bei einer vorteilhaften Ausführungsform kann vorgesehen sein, dass das Traggestell Aussparungen für ein Flurfördergerät, insbesondere ein Gabelstapler, zum Transport des Begründungscontainers mit einem solchen hat. Somit kann der Begrünungscontainer durch einen Gabelstapler transportiert werden, beispielsweise zur genauen Platzierung des Begrünungscontainers an einem Ort.

Als Flurfördergerät kommen insbesondere auch Hubwagen, Teleskoplader oder Radlader in Frage.

Bei einer vorteilhaften Ausführungsform kann vorgesehen sein, dass der Begrünungsbehälter zur Aufnahme eines Baumes ausgebildet ist.

Bei einer vorteilhaften Ausführungsform kann vorgesehen sein, dass der Begrünungsbehälter eine Begrünungsfläche zur Aufnahme der Begrünung aufweist. Hierdurch stellt der Begrünungsbehälter eine Begrünungsfläche zum Verpflanzen von Begrünung bereit. Vorzugsweise kann vorgesehen sein, dass die Begrünungsfläche horizontal angeordnet ist. Hierdurch kann die Begrünungsfläche horizontal bepflanzt werden. Die Begrünungsfläche kann beispielsweise durch eine Oberfläche von Erde gebildet sein. Die Begrünungsfläche kann ferner begehbar ausgebildet sein, beispielsweise so, dass Personen darauf stehen oder sitzen können. Beispielsweise kann die Begrünungsfläche Grasbewuchs aufweisen.

Bei einer vorteilhaften Ausführungsform kann vorgesehen sein, dass die Begrünungsfläche eine Breite hat, die wenigstens 2/3 der Breite des Begrünungscontainers misst. Hierdurch kann eine breite Begrünungsfläche geschaffen werden.

Bei einer vorteilhaften Ausgestaltung kann vorgesehen sein, dass der Begrünungsbehälter entlang einer Querausdehnung eine Tragfläche des Traggestells vollständig bedeckt.

Es kann vorgesehen sein, dass eine Tragfläche des Traggestells vollständig bedeckt ist. Bevorzugt bedeckt das Modul, der Wassertank und, falls vorhanden, ein oder mehrere weitere Module oder ein sonstiger Aufbau wie etwa eine Personennutzfläche die Tragfläche des Traggestells vollständig.

Mit vollständig bedeckt ist gemeint, dass eine Begehung der Tragfläche durch einen Menschen nicht möglich ist.

Bei einer vorteilhaften Ausführungsform kann vorgesehen sein, dass das Traggestell einen Aufbau mit einer Personennutzfläche hat. Eine Personennutzfläche ist eine Oberfläche, welche groß genug ist, um darauf sitzen zu können. Bevorzugt erstreckt sich die Personennutzfläche über eine gesamte Breite und/oder Länge des Begrünungscontainers. Bevorzugt bedeckt der Aufbau ein Modul wie etwa den Wassertank, das Modul des Begrünungsbehälters oder ein anderes Modul. Bevorzugt bildet die Personennutzfläche einen oberen Abschluss des Begrünungscontainers. Bevorzugt befindet sich die Personennutzfläche auf einer Höhe einer maximalen Höhe der einer außenseitigen Verkleidung des Begrünungscontainers. Bevorzugt hat die Personennutzfläche eine Höhe von mindestens 90cm und/oder von höchstens einen Meter. Die Personennutzfläche kann durch Holzlatten gebildet sein. Bevorzugt ist die Personennutzfläche horizontal und/oder planar ausgebildet. Bevorzugt ist die Personennutzfläche von der Begrünungsfläche getrennt. Insbesondere kann die Personennutzfläche eine Sitzfläche sein.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: einen erfindungsgemäßen Begrünungscontainer mit einem darin verpflanzten Baum,
- Fig. 2: eine Draufsicht auf einen erfindungsgemäßen Begrünungscontainer mit mehreren Modulen,
- Fig. 3: eine Draufsicht auf den Begrünungscontainer aus Figur 1,
- Fig. 4: eine Seitenansicht des Begrünungscontainer aus Figur 1, wobei dieser auf ein Nutzfahrzeug verladen ist,
- Fig. 5: eine Untersicht auf das Traggestell eines erfindungsgemäßen Begrünungscontainers,
- Fig.6: eine Seitenansicht auf ein Traggestell mit Begrünungsbehälter, wobei ein Baum aufrechtstehend positioniert ist,
- Fig. 7: eine Seitenansicht des Traggestells und Begrünungsbehälters aus Fig. 6, wobei der Begrünungsbehälter um 90° gekippt ist,
- Fig. 8: eine Seitenansicht eines kleinen und eines großen Baumes,
- Fig. 9: eine Seitenansicht eines Baumes und Begrünungsbehälters in einer Transportstellung,
- Fig. 10: eine Seitenansicht des Baumes und des Begrünungsbehälters aus Fig. 9 in Gebrauchsstellung,
- Fig. 11: eine Seitenansicht eines Begrünungsbehälters und
- Fig. 12: eine Seitenansicht eines LKW der einen Begrünungscontainer auflädt/ablädt.

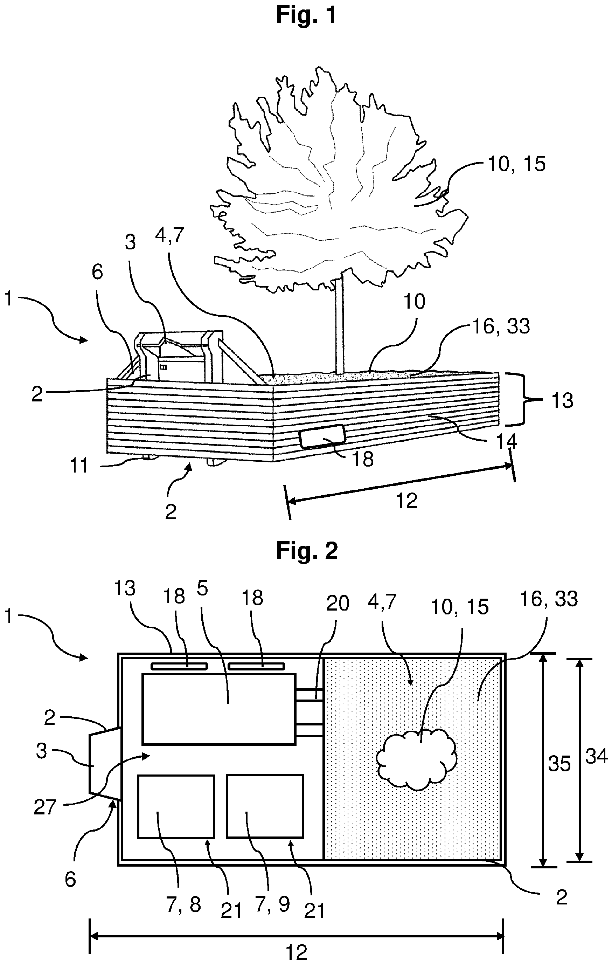

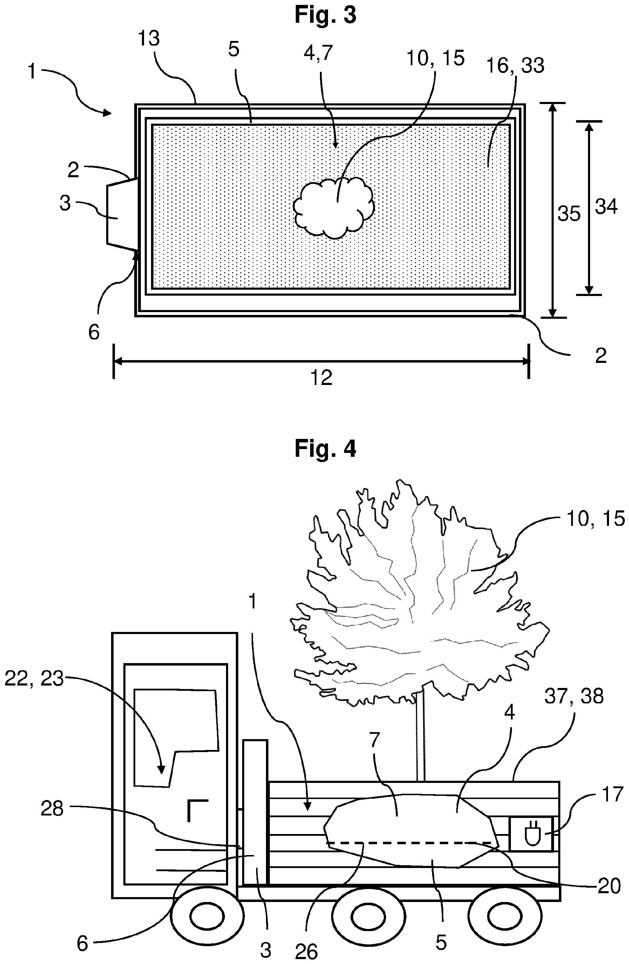

Figur 1 zeigt einen erfindungsgemäß ausgebildeten Begrünungscontainer 1 mit einem metallischen Traggestell 2. Die Figuren 3 und 4 zeigen andere Ansichten des Ausführungsbeispiels der Figur 1, um weitere Details dieser Ausführungsform zu schildern.

Das Traggestell 2 hat eine Halterung 3, welche an einer vertikalen Seitenwand 6 einer Kurzseite des Traggestells 2 ausgebildet ist. Die Halterung 3 dient zur Verbindung des Begrünungscontainers 1 an ein Nutzfahrzeug 22 bzw. dessen Halterung 28 (vgl. Figur 4). In Figur 4 ist gezeigt, dass der Begrünungscontainer 1 während eines Transports über die Halterung 3 an einen als Nutzfahrzeug 22 ausgebildeten LKW 23 befestigt ist. Die Halterung 3 ist ferner zum Abladen des Begrünungscontainers 1 von dem Nutzfahrzeug 22, 23 ausgebildet. Unterstützend zum Abladen sind auch die auf der Unterseite des Traggestells 2 angebrachten und als Schienen ausgebildeten Führungselemente 11. Die Führungselemente 11 sind entlang einer Längsausdehnung 12 des Begrünungscontainers 1 ausgebildet.

Das Traggestell 2 der in Figur 1 gezeigten Ausführungsform hat einen Begrünungsbehälter 4, welcher mit einer in einem Nährboden 16 bepflanzten Begrünung 10 versehen ist. Die Begrünung 10 ist hier ein Baum, also eine verholzte Pflanze 15. Der Begrünungsbehälter 4 kann kleine Bäume 29 und große Bäume 30 aufnehmen.

Der Begrünungsbehälter 4 der in Figur 1 gezeigten Ausführungsform steht in einer fluidischen Verbindung 20 mit einem Wassertank 5, wobei der Begrünungsbehälter 4 oberhalb des Wassertanks 5 ausgebildet ist, wie in Figur 4 näher dargestellt ist. Die fluidische Verbindung 20 umfasst hier Öffnungen (gestrichelte Linie in Figur 4) einer Begrenzung 26 zwischen Begrünungsbehälter 4 und Wassertank 5. Der Wassertank 5 fasst mehr als 1000 Liter Wasser, sodass eine Versorgung der Begrünung 10, 15 für einen längeren Zeitraum gesichert ist. Somit kann die Begrünung 10, 15 bei gefülltem Wassertank 5 mehrere Tage bis Wochen mit Wasser versorgt werden, ohne das Wasser extern dem Wassertank 5 zugeführt werden müsste.

Wie in Figur 4 zu erkennen ist, hat der Begrünungscontainer 1 eine elektrische Verteilerstation 17 zum Laden von E-Scootern und dergleichen.

Der Begrünungscontainer 1 der Ausführungsform der Figur 1 ist in eine außenseitige, 90 Zentimeter hohe Verkleidung 13 aus horizontalen Verkleidungselementen 14 eingefasst. Eine Holzoptik ist besonders anschaulich, wodurch der Begrünungscontainer 1 bevorzugt in Siedlungsgebieten aufgestellt wird.

Ferner ist in Figur 1 zu erkennen, dass die Verkleidung 13 eine Öffnung 18 des Begrünungscontainers 1 umgibt. Diese Öffnung 18 ist mit dem Wassertank 5 in fluidischer Verbindung und dient vorteilhaft zur Befüllung und/oder Leerung des Wassertanks 5. Die Öffnung 18 ist verschließbar und kann für eine bessere Optik durch die Verkleidung 13 verdeckt werden.

Figur 3 zeigt eine Draufsicht des Begrünungscontainers 1. Hierbei ist zu erkennen, dass der Begrünungsbehälter 4 nahezu die gesamte rechteckige Grundfläche des Begrünungscontainers 1 einnimmt. Die Breite des Begrünungscontainers 1 ist dabei etwa 2,50 Meter und die Längsausdehnung 12 beträgt 5 Meter. Das Volumen des Begrünungsbehälters beträgt mehr als 5 Kubikmeter. Der Begrünungscontainer 1 weist eine horizontale Begrünungsfläche 33 zur Aufnahme des Baumes 15 auf. Die Begrünungsfläche 33 hat eine Breite 34 die wenigstens 2/3 der Breite 35 des Begrünungscontainers misst. Der Begrünungscontainer hat eine Personennutzfläche 36 die als Sitzfläche genutzt werden kann und sich über die gesamte Breite 35 des Begrünungscontainers erstreckt. Die Personennutzfläche 36 ist hierbei von der Begrünungsfläche 33 getrennt.

Figur 2 zeigt ein weiteres erfindungsgemäßes Ausführungsbeispiel. Funktionell und/oder konstruktiv zu den vorangehendem Ausführungsbeispiel gleichartige oder identische Bauteile und Funktionseinheiten sind mit denselben Bezugszeichen bezeichnet und nicht noch einmal gesondert beschrieben. Die Ausführungen zu den Figuren 1, 3 und 4 gelten daher zu Figur 2 entsprechend.

Die Ausführungsform der Figur 2 zeigt, dass der mit der Begrünung 10, 15 bepflanze Begrünungsbehälter 4 etwa die Hälfte des Volumens des Begrünungscontainers 1 einnimmt. Benachbart zu dem Begrünungsbehälter 4 ist der Wassertank 5, mit dem der Begrünungsbehälter 4 in fluidischer Verbindung 20, in diesem Fall Rohrleitungen, steht. Ferner ist der Begrünungsbehälter 4 benachbart zu einer Anordnung an austauschbaren Modulen 7. Die Module 7 sind ein Steuermodul 8 zum Überwachen und Steuern biotischer und abiotischer Faktoren und ein Zerstäuber 9 zum Regulieren der relativen Luftfeuchtigkeit und/oder der Umgebungstemperatur um den Begrünungscontainer 1.

Ferner ist zu erkennen, dass die Öffnungen 18 auf der Oberseite des Begrünungscontainers ausgebildet sind.

Wie bereits für die Module 7, 8, 9 dargelegt, ist auch der Wassertank 5 austauschbar. Somit kann eine Transportposition 27 geschaffen werden, in welchem die verholzte Pflanze 10, 15 während des Transports in dem Nutzfahrzeug 22, 23 positioniert werden kann.

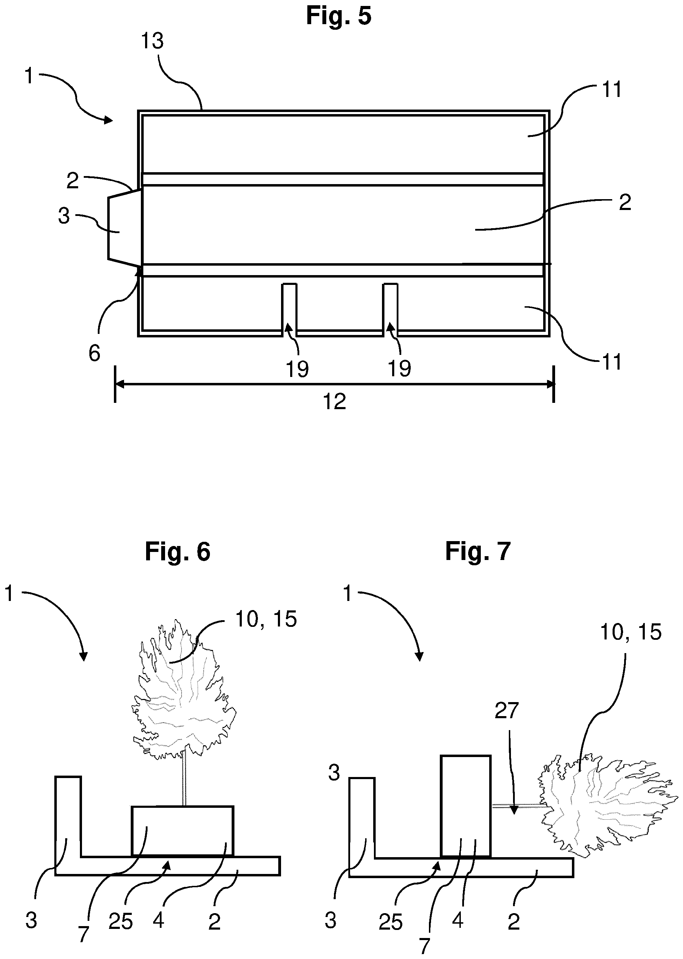

Die Figur 5 zeigt die Unterseite des Traggestells 2, wie es in den vorherigen Ausführungsformen beschrieben wurde. Hierbei ist zu erkennen, dass Aussparungen 19 in dem Traggestell 2 ausgebildet sind, um einen Transport des Begründungscontainers 1 mit einem Gabelstapler zu ermöglichen.

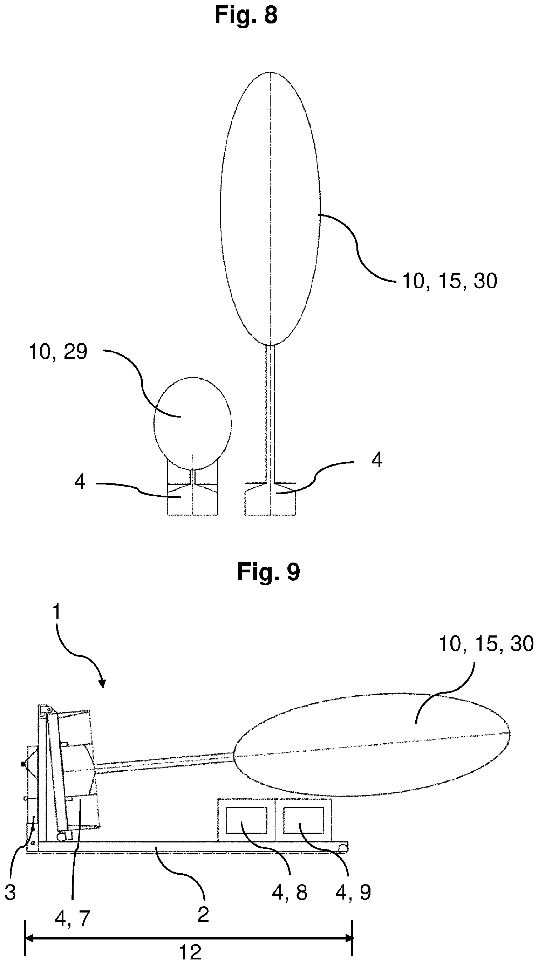

Die Figuren 6 und 7 veranschaulichen, dass der Begrünungsbehälter 4 aus seiner Ausgangsstellung, in der er mit seiner Bodenfläche auf dem Traggestell 2 aufliegt, in eine Kippstellung, in der er mit einer Seitenwand auf dem Traggestellt aufliegt, kippbar in dem Begrünungscontainer 1 angeordnet ist. Somit kann der Baum 10, 15 nach erfolgter Kippbewegung in die Transportposition 27 (Figur 7) überführt und durch das Nutzfahrzeug 22, 23 transportiert werden. Die Kippstellung ist in Fig. 8 gezeigt und wird auch als Transportstellung bezeichnet. Der Begrünungsbehälter 4 ist auf einer Kippvorrichtung 25 angeordnet, einem Schwenkrahmen. Die Kippvorrichtung 25 umfasst einen horizontalen Teil mit Rollen 31 mit denen sich die Kippvorrichtung auf dem Traggestell 2 bewegen lässt. Die Kippvorrichtung 25 umfasst zudem einen vertikalen Abschnitt der sich, sobald sich der Begrünungsbehälter 4 in seiner Gebrauchsstellung bzw. Ausgangsstellung befindet von der Kippvorrichtung 25 lösen lässt und im Begrünungscontainer 1 verstauen lässt.

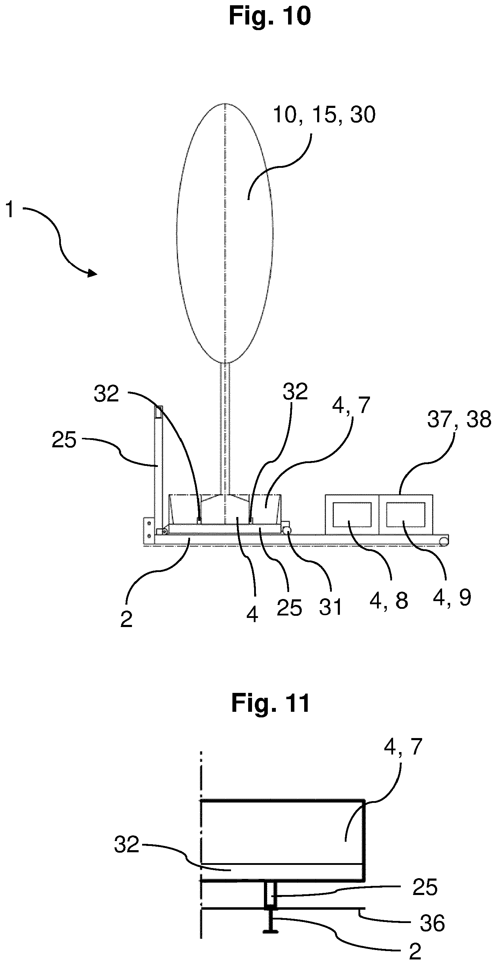

Fig. 11 zeigt eine Seitenansicht eines alternativen Begrünungsbehälters 4 mit einer Verstrebung 32, die mit der Kippvorrichtung 25 zum Kippen des Begrünungsbehälters 4 verbunden ist und auf der Tragfläche 36 des Traggestells 2 steht. Die Verstrebung 32 dient zusätzlich als Halt des Wurzelwerks der Begrünung 10 im Begrünungsbehälter 4.

Der Begrünungsbehälter 4 wird durch die Kippvorrichtung 25 gekippt. Die hier gezeigte Kippvorrichtung 25 weist wenigstens ein bewegliches, metallisches, Teil auf und ist unlösbar und somit stabil mit dem Traggestell 2 verbunden, kann alternativ aber auch lösbar mit dem Traggestell 2 verbunden sein.

Der Transport des Begrünungscontainers 1 ist besonders sicher und der Baum 10, 15 durch die Bepflanzung in dem Begrünungsbehälter 4 besonders stabil positioniert. Aufgrund des aus Metall gefertigten Traggestells 2 und der einstückigen Verbindung des Traggestells 2 mit der Halterung 3, ist insbesondere der Transport des Begrünungscontainers 1 und dessen anschließende Verwendung sicher und langlebig.

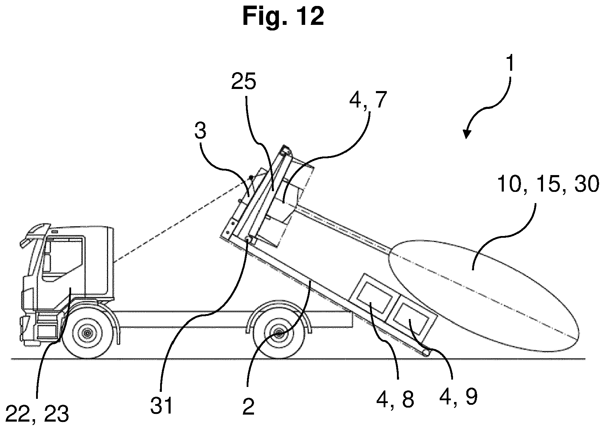

Ein Aufladen auf bzw. ein Abladen des Begrünungscontainers 1 von einem LKW 23 ist in Fig. 12 gezeigt. Hierfür befindet sich der Begrünungscontainer 1 in seiner Kippstellung bzw. Transportstellung.

Die Erfindung schlägt allgemein einen Begrünungscontainer 1 mit einem metallischen Traggestell 2 vor. Das Traggestell 2 weist eine Halterung 3 zum Abladen des Begrünungscontainers 1 von einem Nutzfahrzeug 22 auf, wobei das Traggestell 2 ein Modul 7 trägt, welches einen Begrünungsbehälter 4 umfasst, und wobei der Begrünungsbehälter 4 in fluidischer Verbindung 20 mit einem von dem Traggestell 2 getragenen Wassertank 5 steht.

### Bezugszeichenliste

- 1: Begrünungscontainer
- 2: Traggestell
- 3: Halterung
- 4: Begrünungsbehälter
- 5: Wassertank
- 6: Seitenwand
- 7: Modul
- 8: Steuermodul
- 9: Zerstäuber
- 10: Begrünung
- 11: Führungselemente
- 12: Längsausdehnung von 2
- 13: Verkleidung
- 14: Verkleidungselemente
- 15: verholzte Pflanze/ Baum
- 16: Nährboden
- 17: Verteilerstation
- 18: Öffnungen
- 19: Aussparungen
- 20: fluidische Verbindung
- 21: Moduleinsätze
- 22: Nutzfahrzeug
- 23: LKW
- 24: Verbindungsteil von 22
- 25: Kippvorrichtung
- 26: Begrenzung zwischen 4 und 5
- 27: Transportposition
- 28: Halterung von 22, 23
- 29: kleiner Baum
- 30: großer Baum
- 31: Rollen
- 32: Verstrebung des Begrünungsbehälters
- 33: Begrünungsfläche
- 34: Breite der Begrünungsfläche
- 35: Breite des Begrünungscontainers
- 36: Tragfläche
- 37: Aufbau
- 38: Personennutzfläche

## Patentansprüche

1. Begrünungscontainer (1) mit einem metallischen Traggestell (2), wobei das Traggestell (2) eine Halterung (3) zum Abladen des Begrünungscontainers (1) von einem Nutzfahrzeug (22) aufweist, wobei das Traggestell (2) ein Modul (7) trägt, welches einen Begrünungsbehälter (4) umfasst, und wobei der Begrünungsbehälter (4) in fluidischer Verbindung (20) mit einem von dem Traggestell (2) getragenen Wassertank (5) steht.

2. Begrünungscontainer (1) nach dem vorstehenden Anspruch, **dadurch gekennzeichnet, dass** das Traggestell (2) eine vertikal, vorzugsweise über den Begrünungsbehälter (4) hinausragende, aufragende metallische Seitenwand (6) umfasst, wobei die Halterung (3) an der Seitenwand (6) ausgebildet ist, insbesondere wobei die Seitenwand (6) an einer Kurzseite des Traggestells (2) ausgebildet ist und/oder wobei das Traggestell (2) und die Halterung (3) einstückig ausgebildet sind.

3. Begrünungscontainer (1) nach einem der vorstehenden Ansprüche, wobei der Begrünungscontainer (1) eine mit dem Begrünungsbehälter (4) bewegungsverbundene Kippvorrichtung (25) aufweist, mittels derer der Begrünungsbehälter (4) von einer Ausgangsstellung in eine Kippstellung bewegbar ist, insbesondere wobei die Kippvorrichtung (25) ein bewegliches Teil aufweist, welches an dem Traggestell (2) beweglich gelagert ist.

4. Begrünungscontainer (1) nach einem der vorstehenden Ansprüche, wobei der Begrünungscontainer (1) wenigstens ein weiteres Modul (7) aufweist, insbesondere wobei das Modul (7) austauschbar an oder in dem Begrünungscontainer (1) angeordnet ist.

5. Begrünungscontainer (1) nach einem der vorstehenden Ansprüche, wobei das Modul (7) ein Steuermodul (8) und/oder ein weiterer Wassertank (5) und/oder ein Zerstäuber (9) ist, und/oder wobei das Modul (7) autark mit Energie, insbesondere durch Solarenergie, versorgt werden kann und/oder wobei das Steuermodul (8) zur Überwachung und/oder Steuerung wenigstens eines biotischen und/oder abiotischen Wachstumsfaktors einer Begrünung (10) des Begrünungsbehälters (4), ausgebildet ist.

6. Begrünungscontainer (1) nach einem der vorstehenden Ansprüche, wobei das Traggestell (2) unterseitig lineare Führungselemente (11), insbesondere Schienen, aufweist, welche vorzugsweise entlang der Längsausdehnung (12) des Traggestells (2) verlaufen

7. Begrünungscontainer (1) nach einem der vorstehenden Ansprüche, wobei der Begrünungscontainer (1) eine außenseitig umlaufende Verkleidung (13) aufweist, welche vorzugsweise aus horizontalen Verkleidungselementen (14) ausgebildet ist.

8. Begrünungscontainer (1) nach einem der vorstehenden Ansprüche, wobei in dem Begrünungsbehälter (4) wenigstens eine verholzte Pflanze (15), insbesondere einen Baum, als Begrünung (10) verpflanzt ist, und/oder wobei der Begrünungsbehälter (4) Nährboden (16) für die Begrünung (10) beinhaltet und/oder wobei ein weiterer Begrünungsbehälter herausnehmbar angeordnet ist.

9. Begrünungscontainer (1) nach einem der vorstehenden Ansprüche, wobei der Begrünungsbehälter (4) und/oder das wenigstens eine weitere Modul (7) abdeckbar ist/sind.

10. Begrünungscontainer (1) nach einem der vorstehenden Ansprüche, wobei der Begrünungsbehälter (4) zumindest teilweise oberhalb des Wassertanks (5) und/oder des Moduls (7) angeordnet ist.

11. Begrünungscontainer (1) nach einem der vorstehenden Ansprüche, wobei der Begrünungscontainer (1), insbesondere die Verkleidung (13), eine mittlere Höhe von ein Meter, bevorzugt von 90 Zentimeter, nicht überschreitet und/oder wobei der Begrünungscontainer (1) wenigstens eine elektrische Verteilerstation (17) aufweist.

12. Begrünungscontainer (1) nach einem der vorstehenden Ansprüche, wobei ein Volumen des Begrünungsbehälters (4) mindestens zwei Kubikmeter, insbesondere mindestens fünf Kubikmeter, beträgt und/oder wobei das Traggestell (2) Aussparungen (19) für ein Flurfördergerät, insbesondere einen Gabelstapler, zum Transport des Begrünungscontainers (1) mit einem solchen hat.

13. Begrünungscontainer (1) nach einem der vorstehenden Ansprüche, wobei der Begrünungscontainer (1) wenigstens eine Öffnung (18) nach außen hin aufweist, welche mit dem und/oder einem Wassertank (5) in fluidischer Verbindung steht.

14. Begrünungscontainer (1) nach einem der vorstehenden Ansprüche, wobei der Begrünungsbehälter (4) zur Aufnahme eines Baumes (29, 30) ausgebildet ist und/oder wobei der Begrünungsbehälter (4) seitlich geschlossen ist.

15. Begrünungscontainer (1) nach einem der vorstehenden Ansprüche, wobei eine Tragfläche (36) des Traggestells (2) vollständig bedeckt ist und/oder wobei das Traggestell (2) einen Aufbau (37) mit einer Personennutzfläche (38) hat, insbesondere wobei sich die Personennutzfläche (38) über eine gesamte Breite und/oder Länge des Begrünungscontainers (1) erstreckt und/oder wobei der Aufbau (37) ein Modul (4, 5, 7) bedeckt.
